# EUROPEAN PATENT APPLICATION

(11) **EP 3 367 613 A1**
(43) Date of publication of application: **29.08.2018**
(21) Application number: 17158277.8
(22) Date of filing: 28.02.2017
(51) Int. Cl.: H04L 12/26, H04L 1/18, H04W 28/02, H04W 40/00

(54) **SYSTEM AND METHOD FOR IMPROVING LATENCY IN A WIRELESS BUILDING AUTOMATION NETWORK**

(71) Applicant: ABB Schweiz AG, 5400 Baden (CH)
(72) Inventor: PANG, Zhibo, 722 42 Västerås (SE); BAG, Gargi, 723 44 Västerås (SE); SCHMITT, Johannes, 68526 Ladenburg (DE)
(74) Representative: Jin, Xiao-Hong

(57) **Abstract**

The present invention relates a system and a method for improving latency and reliability of a wireless building automation network. Particularly, the present invention relates to a system and method for improving latency and reliability of wireless building automation network, wherein the building automation system comprises at least one source device, a destination device, a plurality of routers devices and at least one network management unit, wherein the source device has sent a packet to the destination device by multi-hop communication via parts of the router devices and wherein the source device may re-transmit the packet to the destination device after a timeout interval. The method comprising steps of sending a request to each of the devices (S10), receiving responses on the request, wherein a routing table and network traffic status are included in each of the responses (S20), determining the number of hops between the source and destination devices based on the received routing table (S30), estimating or adjusting the timeout interval based on the determined the number of hops between the source and destination devices and network traffic status (S40), and sending the estimated or adjusted timeout interval to the source device (S50), wherein the source device may re-transmit the packet to the destination device based on the estimated timeout interval.

## Description

### FIELD OF THE INVENTION

The present invention relates to a system and method for improving latency and reliability of a wireless building automation network. Particularly, the present invention relates to a system and method for improving latency and reliability of wireless building automation network. The system comprises at least one source device, a plurality of router devices and at least one destination device, wherein the source and destination devices are capable to communicate to each other via multi-hop communications.

### BACKGROUND

Lost packets that are never received in a wireless network results in unreliable communications. Improving reliability is one of the central topic of wireless network design, so mechanisms should be applied as much as possible at all the network layers including application layer. The application layer has more information about the whole system and thus the mechanism at application layer to improve reliability can achieve more application specific optimization e.g. for the building automation network. Therefore, in addition to the mechanisms at other layers, retransmission of packets at application layer until successful delivery is an effective and common method to further improve the reliability in existing standards like the Thread Protocol. For example, CoAP (Constrained Application Protocol) in an application layer ensures reliability by determining whether acknowledgement for the packets send has been received or not by the sender and the protocol is particularly applicable to resource-constrained internet devices, thus to building automation devices. Based on this protocol, the sender can retransmit the packet after a timeout. A standard may specify the maximum number of retransmissions and a timeout value, i.e. a waiting time before next retransmission that may vary for every retransmission. In CoAP, such a timeout is specified to be doubled at each retransmission. Thus, the mechanisms in CoAP relies on retransmissions to improve reliability.

### OBJECTS AND SUMMARY OF THE INVENTION

An object of the present disclosure is to improving latency and reliability of a wireless network in a building automation system.

In a first aspect of the invention, there is a method provided for improving latency and reliability of a wireless network in a building automation system, wherein the building automation system comprises at least one source device, a destination device, a plurality of routers devices and at least one network management unit, wherein the source device sends a packet to the destination device by multi-hop communication via parts of the router devices and wherein the source device may re-transmit the packet to the destination device after a timeout interval, the method comprising steps of
- sending a request to each of the devices,
- receiving responses on the request, wherein a routing table and network traffic status are included in each of the responses,
- determining the number of hops between the source and destination devices based on the received routing table,
- estimating or adjusting the timeout interval based on the determined the number of hops between the source and destination devices and network traffic status, and
- sending the estimated or adjusted timeout interval to the source device, wherein the source device may re-transmit the packet to the destination device based on the estimated timeout interval.

A collection of routing tables provide a network topology. By collecting both static deployment information of building devices such as the network topology and dynamic network traffic status, an optimal timeout interval is estimated or a pre-defined timeout interval is adjusted so that it is adapted to an actual network status, which reduces latency for critical building applications and meanwhile maintains reliability of the building automation system.

The network traffic status includes any of congestion, an average Round Trip Time (RTT) of unicast communication and/or an average Time of Complete Coverage (TCC) of multicast communication between the source and destination devices.

According to one embodiment of the invention, the steps of the method may be performed periodically or alternatively triggered based on a network event.

In a second aspect of the invention, there is a system provided for improving latency and reliability of a wireless network in a building automation system comprising a source device, a destination device, a plurality of router devices and a primary network management unit, wherein the source device will send a packet to the destination device by multi-hop communication via parts of the router devices and wherein the source device will re-transmit the packet to the destination device after a timeout interval, wherein the primary central network management unit is configured to perform the method defined in claims 1-3.

Furthermore, by providing a secondary primary central network management unit arranged to perform the same functions as the primary central network management unit so that a system redundancy is provided, which further enhances the reliability of the BAS.

According to one embodiment of the invention, wherein the primary or secondary central network management unit is either a system access point or a Border Router.

In case of a Thread protocol based wireless network, a Leader in the Thread based wireless network may be configured as the primary or secondary central network management unit.

### BRIEF DESCRIPTION OF THE DRAWINGS

The invention will now be explained more closely by the description of different embodiments of the invention and with reference to the appended figures.
- Fig. 1: illustrates a main flowchart according to one example of the invention;
- Fig. 2: shows a schematic system of Fig. 1;
- Fig. 3a-b: show schematic views of network stacks in a central network management unit and an source device of Fig.2

### DETAILED DESCRIPTION OF PREFERRED EMBODIMENTS OF THE INVENTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art.

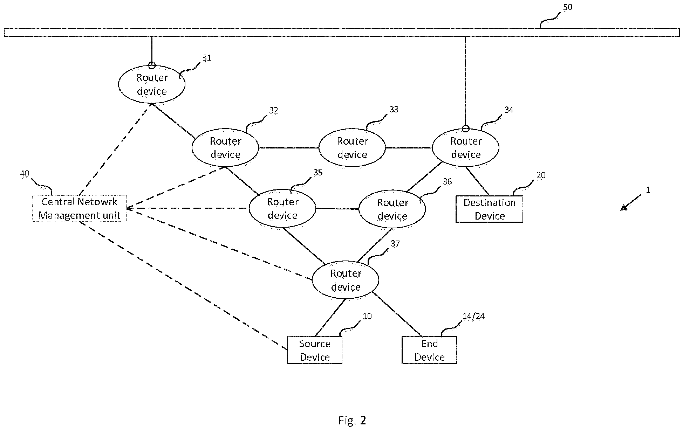

With reference to Figure 2, a system 1 is provided for improving latency and reliability of a wireless network in a building automation system comprising a source device 10, at least one destination device 20, 24, a plurality of router devices 31-37 and a primary network management unit 40, which forms a wireless Building Automation network of a Building Automation System (BAS). In a BA application, a packet will be sent from the source device 10 to the destination device 20. The end devices like source and destination devices and the router devices are the network nodes of the wireless BA network. Router device 31-37 is configured to connect/communicate other router devices or an end device, and/or an external network 50, for example internet. In this example, the router device 37 as an intermediate node is configured to forward the packet to the routers devices 35, 36 and source device 10 and another end device 14. Thus, when the packet is sent from the source device 10 to the destination device 14, the packet is sent by multi-hop communications via some of the router devices, for example via the router devices 37, 36 and 34. A multi-hop communication may be either multicast- or unicast-based.

However, the packet may be lost and never be received e.g. if an unpredictable interference occurs during the mean time which results in too low signal quality for the receiver to correctly decode the received signal. The source device 10 thus needs to re-transmit the packet to the destination device 20 after a certain timeout interval or a rule that is pre-defined. For example, in CoAP (Constrained Application Protocol), the timeout should be doubled at each of retransmissions, which means the more retransmission fails the longer the source device has to wait until the next re-transmission.

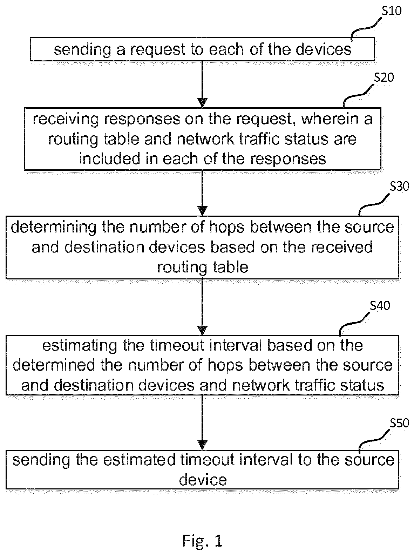

In other words, the pre-defined timeout value may increase latency and thus decrease reliability of the BAS. In order to cope with a real network traffic status, the primary central network management unit 40 is configured to monitor traffic status of the wireless BA network of the BAS. To do so, it send a request to each of the devices, step S10 with reference to Figure 1. Such a request itself may a multi-hop communication. In a Thread network, such a request may implemented as a CoAP request. Thus, the node that receives the request acts as a CoAP client. Upon receiving the request, each of the nodes will send a routing table storing within the node and network traffic status, step S20.

Furthermore, the network traffic status may include other network related information such as network congestion, an average Round Trip Time of unicast communication and/or an average Time of Complete Coverage of multicast communication between the source and destination devices. Then network congestion can be reflected by the number of packets currently present/stranded in the buffer of a node for example. However, it should be understood that other types of the information could be used as well.

Upon receipt of the response, the primary central network management unit 40 will construct a topology and thereby determine the number of the hops between the source device 10 and destination device 20 based on the received routing table, step S30. It further estimates or adjusts the timeout interval based on the determined the number of hops between the source and destination devices and network traffic status, step S40; and sending the estimated or adjusted timeout interval to the source device 10 that may re-transmit the packet to the destination device based on the estimated timeout interval, step S50. Preferably, the timeout interval is estimated or adjusted based on statistical distribution of the RTT for unicast and TCC for multicast. In practice, the timeout interval can be set in the range where 90%-99.9% of the samples of RTT or TCC is shorter than the selected value of timeout interval.

The above steps may be performed periodically or alternatively triggered based on a network event for example when a new node is added or an existing node is dropped off.

The primary central network management unit 40 may be either a system access point. In case that the wireless BA network is a Thread protocol based wireless network, a Leader or a Border Router in the Thread based wireless network may act as the primary central network management unit.

The system 1 may further comprise a secondary central network management unit in order to provide system redundancy, which further enhances the reliability of the BAS. Like the primary central network management unit, it may also be one of system access point, a Border Router or a Leader in case of Thread network.

The present invention is simple to be implemented at an application layer of its network stack in an existing system access point, a Border Router or a Leader which has more computing power. At an application layer of a network stack of an end device or a Router device, it can be realized by a light corresponding implementation. Thus, end devices or other Router devices can still be low cost devices without requiring powerful computing capabilities.

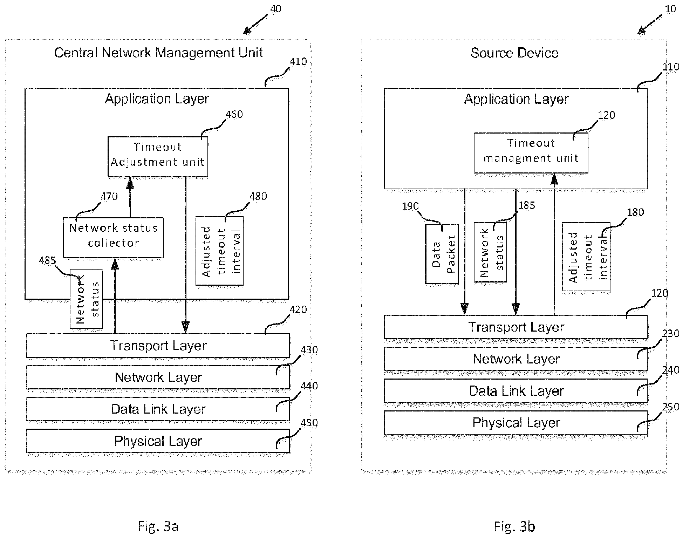

With reference to Figure 3a-b, a classical protocol stack of a network device 40/10, the central network management unit or source device 10 in this example, comprising an application layer 410/110, a transport layer 420/120 arranged for reliable transmission of data segments between points on a network, including segmentation, acknowledgement and multiplexing, a network layer 430/130 arranged for packet structuring and managing a multi-node network, including addressing, routing and traffic control, a data layer 440/240 arranged for reliable transmission of data frames between two nodes and a physical layer 450/250 arranged for a reliable transmission and reception of raw bit streams over a physical medium, thus thereby connecting network nodes; The application layer may comprises high-level APIs, including resource sharing, remote file accessing and arranged for a reliable translation of data between a networking service and an application; including character encoding, data compression and encryption/decryption and managing communication sessions, i.e. continuous exchange of information in the form of multiple back-and-forth transmissions between itself with another network node.

In this example, the central network management unit 40 further comprises a timeout adjustment unit 460 and a network status collector 470. The network status collector 470 is configured to collect network traffic status including routing tables from end devices connected in the network of the BAS including the routing tables and forwards the collected information to the timeout adjustment unit 460 configured to determines the number of hops between the source 10 and a destination device 20 based on the received routing table. The timeout adjustment unit 460 further estimates or adjusting a timeout interval 480/180 based on the determined the number of hops between the source and destination devices 10, 20 and network traffic status 485, and sends the estimated or adjusted timeout interval 480 to the source device 10 that may re-transmit the data packet 190 based on the adjusted timeout interval 180.

The above step may be implemented in computer program products installed or equipped on the building automation wireless devices, which are non-transitory storage medium or computer readable medium (media) having instructions stored thereon/in which when executed by a processor performs the method of the present invention. Examples of the storage medium may include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

## Claims

1. A method for improving latency and reliability of a wireless network in a building automation system, wherein the building automation system comprises at least one source device, a destination device, a plurality of routers devices and at least one network management unit, wherein the source device has sent a packet to the destination device by multi-hop communication via parts of the router devices and wherein the source device may re-transmit the packet to the destination device after a timeout interval, the method comprising steps of
- sending a request to each of the devices (S10),
- receiving responses on the request, wherein a routing table and network traffic status are included in each of the responses (S20),
- determining the number of hops between the source and destination devices based on the received routing table (S30),
- estimating or adjusting the timeout interval based on the determined the number of hops between the source and destination devices and network traffic status (S40), and
- sending the estimated or adjusted timeout interval to the source device (S50), wherein the source device may re-transmit the packet to the destination device based on the estimated timeout interval.

2. Method according to claim 1 further comprises periodically performing the steps of claim 1.

3. Method according to claim 1 further comprises performing the steps of claim 1 based on a network event.

4. Method according to claim 1, wherein the network traffic status includes any of congestion, an average Round Trip Time of unicast communication and/or an average Time of Complete Coverage of multicast communication between the source and destination devices.

5. A system for improving latency and reliability of a wireless network in a building automation system, wherein the building automation system comprises a source device, a destination device, a plurality of router devices and a primary network management unit, wherein the source device will send a packet to the destination device by multi-hop communication via parts of the router devices and wherein the source device will re-transmit the packet to the destination device after a timeout interval, **characterized in that** the central network management unit is configured to perform the method according claims 1-3.

6. System according to claim 5 or 6 further comprises a secondary central network management unit arranged to perform the steps of claims 1-3 whenever the primary central network management unit fails.

7. System according to claim 5 or 6, wherein the primary or secondary central network management unit is either a system access point or a Border Router.

8. System according to claim 7, wherein the wireless network is based on Thread protocol and the primary or secondary central network management unit is a Leader of the Thread based wireless network.
